(19) **Europäisches Patentamt European Patent Office Office européen des brevets**

(11) **EP 4 420 231 B1**

(12) **FASCICULE DE BREVET EUROPÉEN**

(45) Date de publication et mention de la délivrance du brevet:
**29.04.2026 Bulletin 2026/18**

(21) Numéro de dépôt: **22801862.8**

(22) Date de dépôt: **18.10.2022**

(51) Classification Internationale des Brevets (IPC):
*H02P 6/16* (2016.01)  *H02P 6/17* (2016.01)
*H02P 21/18* (2016.01)  *H02P 23/18* (2016.01)
*H02P 25/026* (2016.01)

(52) Classification Coopérative des Brevets (CPC):
**H02P 6/16; H02P 6/17; H02P 21/18; H02P 23/18; H02P 25/026;** H02P 2203/00

(86) Numéro de dépôt international:
**PCT/FR2022/051966**

(87) Numéro de publication internationale:
**WO 2023/067278 (27.04.2023 Gazette 2023/17)**

(54) **COMMANDE D'UNE MACHINE ÉLECTRIQUE TOURNANTE**

STEUERUNG EINER ELEKTRISCHEN DREHMASCHINE

CONTROL OF A ROTARY ELECTRIC MACHINE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **19.10.2021 FR 2111101**

(43) Date de publication de la demande:
**28.08.2024 Bulletin 2024/35**

(73) Titulaire: **Safran Electrical & Power 31702 Blagnac (FR)**

(72) Inventeurs:
• **SABER, Christelle 77550 MOISSY-CRAMAYEL (FR)**
• **ROUHANA, Najib 77550 MOISSY-CRAMAYEL (FR)**

(74) Mandataire: **Santarelli Tour Trinity 1 bis Place de la Défense 92400 Courbevoie (FR)**

(56) Documents cités:
WO-A1-2021/121770    FR-A1- 3 104 856
US-A1- 2018 052 009

**Description**

**Domaine technique**

La présente invention concerne le domaine de commande des machines électriques tournantes.

**Etat de la technique antérieure**

Une machine électrique peut être utilisée dans toutes les domaines industrielles. Par exemple, certaines machines électriques présentant un couple élevé, une faible inertie et des réponses rapides sont avantageusement utilisées dans la motorisation d'actionneurs, notamment dans des systèmes embarqués d'un aéronef.

De manière générale, une machine électrique par exemple, un moteur électrique est équipé d'un dispositif de commande ou de pilotage destiné à régler la tension à ses bornes en fonction des données électriques de retour et surtout d'une donnée précise sur la position angulaire $\theta$ du rotor. Cette information provient habituellement d'un résolveur ou capteur de position souvent monté sur l'arbre de la machine électrique afin de mesurer l'angle mécanique $\theta_{meca}$ (en rad) du rotor, également appelée position mécanique.

La position mécanique mesurée par le résolveur constitue une donnée d'entrée primordiale pour le pilotage de la machine électrique. En effet, la position électrique $\theta_{erec}$ qui en découle est utilisée pour effectuer des transformations de repères (par exemple, transformées de Park et de Park inverse) associées au pilotage de la machine électrique.

En outre, cette information sur la position mécanique est exploitée pour estimer la vitesse mécanique de rotation et pour réaliser les changements de repère au niveau du contrôle. Habituellement, on utilise une dérivée pour estimer la vitesse mécanique à partir de la mesure de la position mécanique du rotor. La vitesse électrique $\omega_{elec}$ déduite de la vitesse mécanique peut être employée au niveau du pilotage de la machine pour assurer le découplage entre les axes d et q dans un repère synchrone tournant (d,q).

Toutefois, le signal de position généré par le résolveur n'est pas propre dans le sens qu'il renferme des harmoniques qui peuvent être d'origine vibratoire sur l'arbre de la machine électrique et qui éventuellement, se superposent à des signaux issus d'un Convertisseur Résolveur-Numérique RDC (Resolver-to-Digital Converter).

En outre, le calcul classique de la vitesse mécanique basé sur le calcul d'une dérivée de la position mécanique $\theta$ renferme les mêmes harmoniques. Tout harmonique de fréquence qui se superpose à ces deux grandeurs, position et vitesse, pourrait engendrer des vibrations de couple sur l'arbre et des pertes fer et cuivre supplémentaires dans la machine électrique.

Une solution trouvée dans l'état de l'art, consiste à employer des filtres numériques passe-bas pour atténuer le contenu en harmoniques de ces deux signaux de vitesse et de position. Cependant, l'information sur la vitesse risque d'être atténuée car très souvent les harmoniques en question sont de nature basse fréquence. En effet, afin d'être efficace, la fréquence de coupure choisie pour le filtre passe bas doit être proche du signal continu, à fréquence nulle. En outre, l'information sur l'angle risque d'être retardée à cause du retard engendré par le déphasage du filtre numérique passe bas. Ces deux conséquences peuvent mettre à risque la stabilité et la faisabilité du contrôle de la machine électrique.

Les documents US2018/052009, WO2021/121770 et FR3104856 décrivent des exemples de dispositifs de commande pour machines électriques tournantes, selon l'état de l'art. L'objet de la présente invention est par conséquent, de proposer un procédé et un système de détermination des paramètres de commande (position et vitesse), remédiant aux inconvénients précités, admettant une grande précision dans la détermination d'une position électrique dépourvue d'harmoniques et sans déphasage par rapport à la position mécanique, permettant ainsi, de piloter une machine électrique avec une grande stabilité et une grande fiabilité.

**Présentation de l'invention**

L'invention est définie aux revendications indépendantes 1 et 10. La présente invention concerne un procédé de détermination de paramètres de commande d'une machine électrique tournante, comportant les étapes suivantes :

- mesure de la position mécanique $\theta_{meca}$ de l'axe d'un rotor de la machine tournante,
- construction de deux signaux diphasés fictifs $x_\alpha$, $x_\beta$ en se basant sur la mesure de ladite position mécanique,
- détermination en boucle ouverte d'une estimation de la vitesse électrique, dite vitesse électrique estimée en boucle ouverte $\omega_{estflt}$, en utilisant lesdits signaux diphasés fictifs,
- injection desdits deux signaux diphasés fictifs $x_\alpha$, $x_\beta$ et de ladite vitesse électrique estimée en boucle ouverte $\omega_{estflt}$ dans une boucle de verrouillage de phase, et
- génération par ladite boucle de verrouillage de phase, de la position électrique effective $\theta$ de la machine tournante.

Ce procédé permet de déterminer avec une grande précision la position angulaire électrique dépourvue d'harmoniques et sans déphasage par rapport à la position mesurée de l'axe du rotor de la machine tournante.

La mesure de la position mécanique $\theta_{meca}$ peut être réalisée par un capteur de position monté sur l'arbre de la machine électrique.

Avantageusement, la construction desdits deux signaux diphasés fictifs comporte les étapes suivantes :

- calculer une estimation d'une position électrique, dite position électrique estimée $\theta_{elec}$, en multipliant la position mécanique $\theta_{meca}$ par le nombre p de paires de pôles de la machine électrique, et
- calculer à partir de ladite position électrique estimée $\theta_{elec}$, deux signaux sinusoïdaux normalisés et décalés entre eux de 90° formant ainsi, lesdits deux signaux diphasés fictifs.

Avantageusement, la détermination de la vitesse électrique estimée $\omega_{estflt}$ comporte les étapes suivantes :

- génération de deux signaux pulsatoires aux passages par zéro desdits signaux diphasés fictifs $x_\alpha, x_\beta$,
- détermination d'une estimation préliminaire d'une vitesse électrique, dite vitesse électrique préliminaire $\omega_{est}$, à partir de la somme desdits deux signaux pulsatoires et d'une fréquence électrique utile maximale associée à une vitesse de rotation maximale, et
- détermination de la vitesse électrique estimée en boucle ouverte $\omega_{estflt}$ en appliquant un filtre passe bande sélectif sur ladite vitesse électrique préliminaire $\omega_{est}$.

Avantageusement, la détermination desdits deux signaux pulsatoires comporte les étapes suivantes :

- transformer les deux signaux diphasés fictifs sinusoïdaux en signaux carrés de largeur prédéterminé, et
- générer lesdits deux signaux pulsatoires en détectant les changements de fronts, montants et descendants, desdits signaux carrés.

Avantageusement, la génération par ladite boucle de verrouillage de phase, de la position électrique effective $\theta$ de la machine tournante comporte les étapes suivantes :

- appliquer une matrice de rotation aux signaux diphasés fictifs $x_\alpha$, $x_\beta$ pour extraire une composante continue $x_d$ du signal fictif selon l'axe d d'un repère synchrone tournant,
- asservir la composante continue $x_d$ à une consigne $x_d^*$ nulle,
- déterminer un correcteur y sur la base de l'écart entre ladite consigne et ladite composante continue,
- déterminer une estimation d'une vitesse électrique à verrouillage de phase $\omega_{PLL}$, en ajoutant ledit correcteur y à la vitesse électrique estimée $\omega_{estflt}$ en boucle ouverte,
- déterminer une estimation d'une position angulaire préliminaire $\vartheta_v$ en intégrant ladite vitesse électrique à verrouillage de phase $\omega_{PLL}$, et
- déterminer la position électrique effective de la machine électrique en compensant un retard sur l'estimation de la position angulaire préliminaire $\vartheta_v$ de l'arbre de la machine électrique.

Avantageusement, selon un premier mode de réalisation, le procédé comporte la détermination d'une vitesse électrique effective $\omega$ de la machine électrique en appliquant un filtrage actif passe bas à la vitesse électrique à verrouillage de phase $\omega_{PLL}$.

Avantageusement, selon un deuxième mode de réalisation, le procédé comporte la détermination d'une vitesse électrique effective $\omega$ de la machine électrique en appliquant un filtre actif passe bande sélectif sur la composante continue $x_d$ du signal fictif selon l'axe d du repère synchrone tournant, la vitesse électrique effective $\omega$ correspondant alors à la vitesse électrique à verrouillage de phase $\omega_{PLL}$.

Avantageusement, selon un troisième mode de réalisation, le procédé comporte la détermination d'une vitesse électrique effective $\omega$ de la machine électrique en appliquant un observateur de vitesse à la position électrique effective de la machine électrique, la vitesse électrique effective $\omega$ correspondant alors à une image de la vitesse électrique filtrée obtenue par ledit observateur de vitesse.

L'invention vise également un procédé de commande d'une machine tournante comprenant une détermination de paramètres de commande selon l'aspect précédent.

L'invention vise également un système de détermination de paramètres de commande d'une machine électrique tournante, comportant :

- un module de repère fictif diphasé configuré pour construire deux signaux diphasés fictifs $(x_a, x_\beta)$ en se basant sur une mesure de la position mécanique $\theta_{meca}$ de l'axe d'un rotor de la machine tournante reçue depuis un capteur de position,
- un module de boucle ouverte configuré pour déterminer en boucle ouverte d'une estimation de la vitesse électrique, dite vitesse électrique estimée en boucle ouverte $\omega_{estflt}$, en utilisant lesdits signaux diphasés fictifs,
- un module de boucle de verrouillage de phase configuré pour générer la position électrique effective $\theta$ de la machine tournante à partir desdits deux signaux diphasés fictifs ($x_\alpha$, $x_\beta$) et en utilisant ladite vitesse électrique estimée en boucle ouverte $\omega_{estrflt}$ reçue depuis le module de boucle ouverte.

L'invention vise aussi un dispositif de pilotage d'une machine électrique tournante comportant le système de détermination de paramètres électriques selon les caractéristiques ci-dessus.

L'invention vise également une machine électrique tournante comportant le dispositif de pilotage selon les caractéristiques ci-dessus.

**Brève description des figures**

D'autres caractéristiques et avantages de l'invention apparaîtront à la lecture de modes de réalisation préférentiels de l'invention faits en référence aux figures jointes parmi lesquelles :

[Fig. 1] représente de manière schématique une machine électrique tournante comportant un système de détermination de paramètres de commande de la machine électrique, selon un mode de réalisation de l'invention ;

[Fig. 2] représente de manière schématique un système de détermination de paramètres de commande, selon un mode de réalisation préféré de l'invention

[Fig. 3A]

[Fig. 3B]

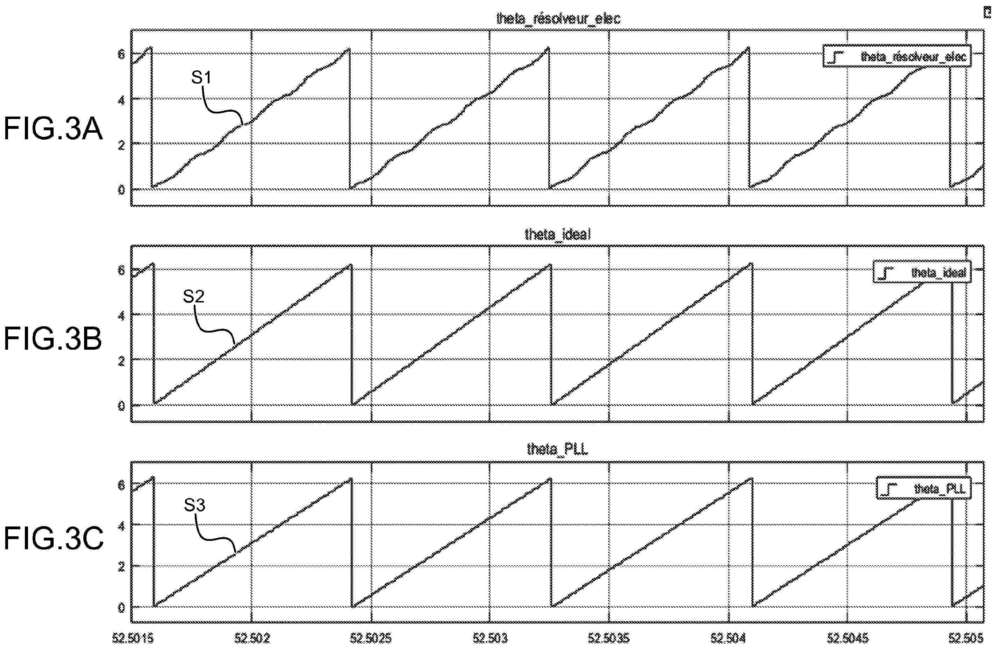

[Fig. 3C] sont des courbes montrant le résultat sur la position de la machine électrique, selon le procédé de l'invention ;

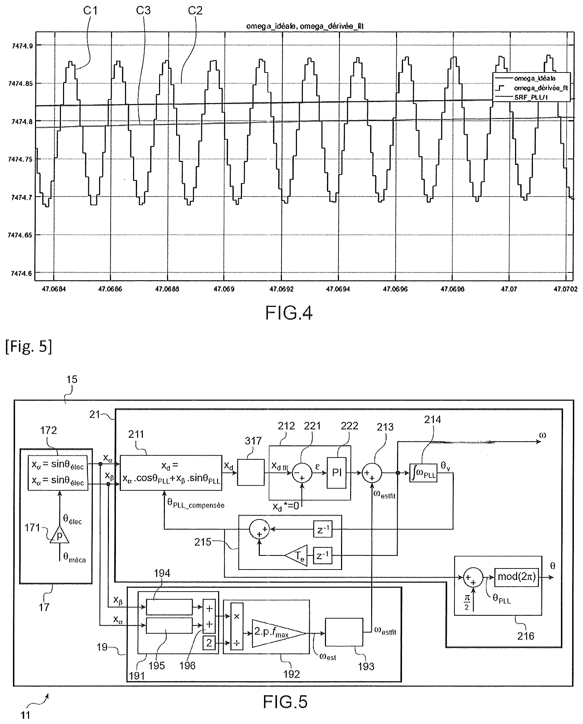

[Fig. 4] est un zoom comparant la vitesse électrique obtenue selon l'état de l'art avec celle obtenue selon le procédé de l'invention ; et

[Fig. 5] et

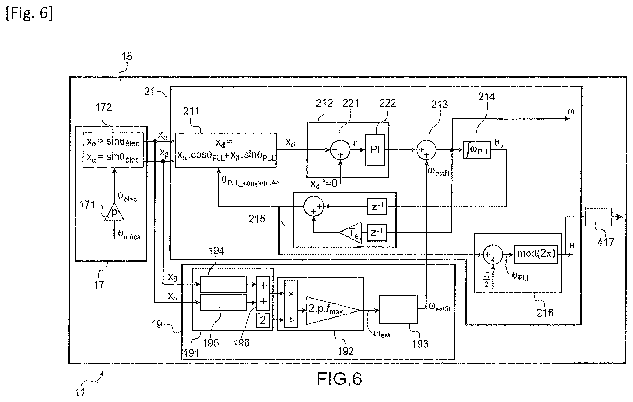

[Fig. 6] représentent de manière schématique des systèmes de détermination de paramètres de commande, selon des deuxième et troisième modes de réalisation préférés de l'invention.

**Description des modes de réalisation**

Le concept de l'invention est de faire un traitement numérique sur le signal de mesure de la position mécanique de l'axe du rotor d'une machine électrique en créant un repère diphasé fictif et en utilisant ce repère diphasé comme une donnée d'entrée d'une boucle de verrouillage de phase pour générer une position résultante dépourvue d'harmoniques. En outre, cette boucle de verrouillage est également exploitée pour calculer la vitesse.

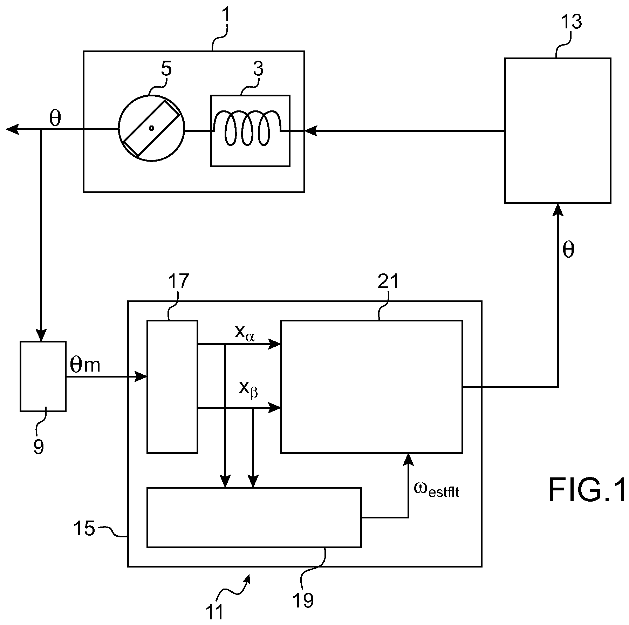

La Fig. 1 représente de manière schématique une machine électrique tournante comportant un système de détermination de paramètres de commande de la machine électrique, selon un mode de réalisation de l'invention.

La machine électrique tournante 1 (en mode moteur ou en mode générateur) comporte de manière habituelle des enroulements statoriques 3 et un rotor 5 avec $p$ paires de pôles (dont une seule paire est représentée, i.e. $p$ = 1).

Un resolver ou un capteur de position 9 (par exemple, un capteur à effet de Hall) est monté sur l'arbre de la machine électrique 1 pour mesurer la position mécanique $\theta_m$ de l'axe du rotor 5.

Conformément à l'invention, la machine électrique 1 est équipé d'un système 11 de détermination de paramètres de commande. Ce système 11 reçoit le signal de la position mécanique $\theta_m$ mesurée par le capteur de position 9 pour filtrer les harmoniques basses fréquences qui peuvent être présentes dans ce signal sans introduire de déphasage.

Le système 11 de détermination de paramètres de commande transmet ainsi à un dispositif de commande 13, des signaux utiles sur la position $\theta$ du rotor et éventuellement sur la vitesse de rotation dépourvus d'harmoniques.

Le dispositif de commande 13 utilise les signaux propres reçus depuis le système 11 de détermination de paramètres de commande ainsi que des données électriques habituelles de retour pour contrôler ou piloter le point de fonctionnement de la machine électrique 1 en fonction de la position effective $\theta$ du rotor 5.

Le système 11 de détermination de paramètres de commande comporte un circuit électronique 15 configuré pour réaliser un traitement numérique de filtrage sur le signal de la position mécanique $\theta_m$ mesurée par le capteur de position 9. La position angulaire issue de ce traitement est alors, dépourvue d'harmoniques. Le circuit électronique 15 est configuré également pour calculer la vitesse mécanique qui en découle sans répercuter les harmoniques et sans atténuer le signal.

Selon un mode de réalisation de l'invention, le circuit électronique 15 comporte un module de repère fictif diphasé 17, un module de boucle ouverte 19, et un module de boucle de verrouillage de phase 21.

Le module de repère fictif diphasé 17 est configuré pour construire deux signaux diphasés fictifs ($x_a$, $x_\beta$) en se basant sur la mesure de la position mécanique $\theta_m$.

Le module de boucle ouverte 19 est configuré pour déterminer une estimation de la vitesse électrique, dite vitesse électrique estimée en boucle ouverte $\omega_{estflt}$, en utilisant les signaux diphasés fictifs $(x_\alpha, x_\beta)$.

Les deux signaux diphasés fictifs $(x_\alpha, x_\beta)$ et la vitesse électrique estimée en boucle ouverte $\omega_{estflt}$ sont injectés dans le module de boucle de verrouillage de phase 21. Ce dernier 21 exploite les signaux diphasés fictifs $(x_\alpha, x_\beta)$ comme une donnée d'entrée pour déterminer la position électrique de la machine électrique tout en utilisant la vitesse électrique estimée en boucle ouverte $\omega_{estflt}$ pour améliorer la dynamique de l'asservissement en position. Ceci permet au module de boucle de verrouillage de phase 21 de générer une position électrique effective $\theta$ très précise du rotor 5 de la machine électrique 1 et dépourvu d'harmoniques.

On notera que les modules 17, 19, 21 peuvent être des modules matériels et/ou logiciels. Le traitement numérique peut alors être réalisé par un microprocesseur compris dans le circuit électronique 15. En outre, le circuit électronique 15 peut être compris dans le dispositif de commande 13.

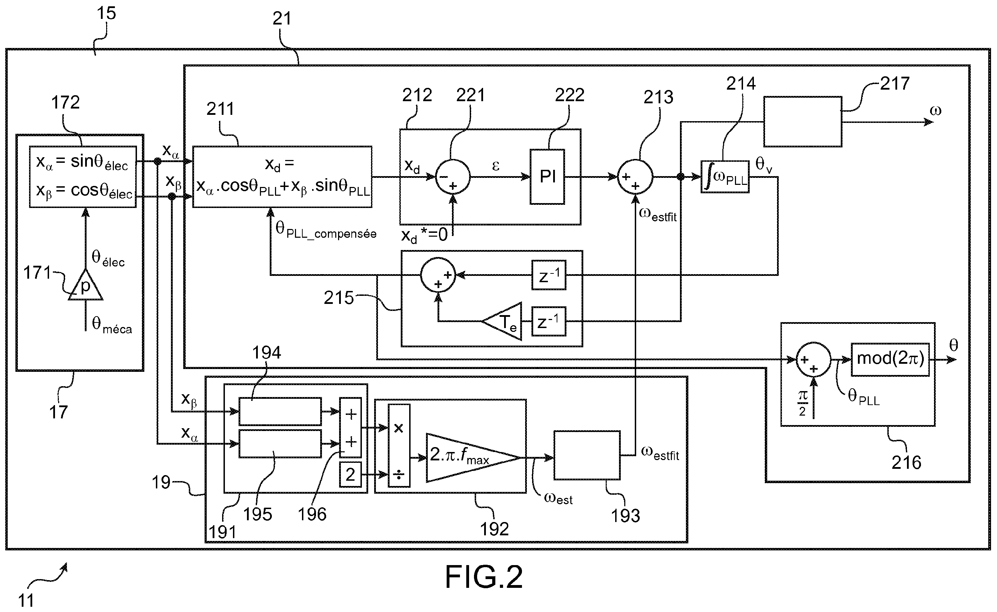

La Fig. 2 représente de manière schématique un système de détermination de paramètres de commande, selon un mode de réalisation préféré de l'invention.

Comme sur la Fig. 1, le système 11 de détermination de paramètres de commande comporte un circuit électronique 15 comprenant un module de repère fictif diphasé 17, un module de boucle ouverte 19, et un module de boucle de verrouillage de phase 21.

Le module de repère fictif diphasé 17 comporte un élément multiplicateur 171 et un élément d'ortho-normalisation 172. L'élément multiplicateur 171 multiplie le signal de la position mécanique $\theta_{meca}$ issu du capteur de position 9 par le nombre p de paires de pôles de la machine électrique 1. A la sortie de cet élément multiplicateur 171, on obtient une estimation d'une position électrique, dite position électrique estimée $\theta_{elec}$ en radian, de la position angulaire du rotor :

$$\theta_{elec} = p \cdot \theta_{meca}$$

L'élément d'ortho-normalisation 172 calcule alors, à partir de la position électrique estimée $\theta_{elec}$, deux signaux sinusoïdaux normalisés et décalés entre eux de 90° formant ainsi, deux signaux diphasés fictifs $(x_\alpha, x_\beta)$:

$$\begin{cases} x_\alpha = \sin \theta_{élec} \\ x_\beta = \cos \theta_{élec} \end{cases}$$

Les deux signaux diphasés fictifs $(x_\alpha, x_\beta)$ forment un repère fictif diphasé constituant des données d'entrée pour les modules de boucle ouverte 19, et de boucle de verrouillage de phase 21.

Le module de boucle ouverte (symbolisé « flt ») 19 comporte trois unités : une unité de génération de pulses 191, une unité de génération de valeur moyenne 192 et une unité de filtrage sélectif 193.

L'unité de génération de pulses 191 est configurée pour générer deux signaux pulsatoires aux passages par zéro des signaux diphasés fictifs $(x_\alpha, x_\beta)$. Plus particulièrement, cette unité de génération de pulses 191 comporte des premier 194 et second 195 éléments de détection et un élément d'addition 196.

Les premier 194 et second 195 éléments de détection sont configurés pour générer, aux passages par zéro de leur signaux d'entrées respectifs $x_\alpha$ et $x_\alpha$ des pulses dont la durée est inversement proportionnelle à une fréquence électrique utile maximale $f_{max}$ associée à une vitesse de rotation maximale de le machine électrique 1.

Chaque détection de passages par zéro est codée de sorte qu'à la sortie des premier 194 et second 195 éléments de détection on obtient des premier et second signaux pulsatoires $fronts_{x_\alpha}$, $fronts_{x_\beta}$ respectivement.

Un exemple de codage est donné ci-dessous pour le cas du premier signal pulsatoire $fronts_{x_\alpha}$ sachant que le codage est similaire pour le second signal pulsatoire $fronts_{x_\beta}$.

Au début, le signal sinusoïdal en entrée $x_\alpha$ est transformé en signal carré variant entre 0 et 2, tel que la valeur maximale 2 indique une alternance positive du signal sinusoïdal $x_\alpha$ et la valeur minimale 0 du signal carré indique une alternance négative de $x_\alpha$, comme suit :

$$\begin{cases} square = 2, si\ x_\alpha > 0 \\ square = 0, si\ x_\alpha < 0 \\ square = 1, si\ x_\alpha = 0 \end{cases}$$

Ensuite, les changements de fronts, montants et descendants, du signal carré sont détectés et interprétés par des pulses de période $\Delta t$, égale à :

$$\Delta t = \frac{1}{2 \cdot f_{max}}$$

Plus particulièrement, chacun des premier 194 et second 195 éléments de détection comporte deux circuits monostables montant et descendant (non représentés) de sorte que, les signaux carrés sont injectés dans ces deux circuits monostables.

Par exemple, le circuit monostable montant est défini en relation avec une période d'échantillonnage $T_e$, de la manière suivante :

$$\begin{cases} si\ y > (-T_e), & alors\ fronts_{montants\ alpha} = 1 \\ sinon, & fronts_{montants\ alpha} = 0 \end{cases}$$

où $y = k - T_e$ et où la valeur $k$ est définie selon la valeur d'une variable binaire u, de la manière suivante :

$$\begin{cases} si\ u \neq 0, & alors\ k = \frac{1}{2 \cdot f_{max}} - \varepsilon \\ si\ u = 0, & alors\ k = z^{-1} \cdot y \end{cases}$$

En outre, la table de vérité (Tab 1) suivante permet de déduire la valeur de la variable binaire u:

[Tab. 1]

| $a = \overline{z^{-1} \cdot fronts_{montants\ alpha}}$ | $b = \begin{cases} 1, & si\ square_{alpha} > z^{-1} \cdot square_{alpha} \\ 0, & si\ square_{alpha} \leq z^{-1} \cdot square_{alpha} \end{cases}$ | u = a ET b |
|---|---|---|
| 0 | 0 | 0 |
| 0 | 1 | 0 |
| 1 | 0 | 0 |
| 1 | 1 | 1 |

On notera que la logique du circuit monostable descendant est équivalente au circuit monostable montant. La seule différence réside dans le calcul du paramètre binaire « b » qui devient comme suit :

$$b = \begin{cases} 1, & si\ z^{-1} \cdot square_{alpha} > square_{alpha} \\ 0, & si\ z^{-1} \cdot square_{alpha} \leq square_{alpha} \end{cases}$$

L'élément d'addition 196 de l'unité de génération 191 est configuré pour additionner les deux signaux pulsatoires $fronts_{x_\alpha}$, $fronts_{x_\beta}$. Ainsi, à la sortie de cet élément d'addition 196, on a un signal de superposition $ZC$ :

$$ZC = fronts_{x_\alpha} + fronts_{x_\beta}$$

Par ailleurs, l'unité de génération de valeur moyenne 192 est configurée pour déterminer une estimation préliminaire d'une vitesse électrique, dite vitesse électrique préliminaire $\omega_{est}$. Cette vitesse électrique préliminaire $\omega_{est}$ est calculée à partir du signal de superposition ZC et de la fréquence électrique utile maximale $f_{max}$. Plus particulièrement, le signal de superposition ZC est multiplié par $2\pi f_{max}$ et divisé par 2, selon la formule suivante :

$$\omega_{est} = ZC \cdot \frac{2 \cdot \pi \cdot f_{max}}{2}$$

En outre, l'unité de filtrage sélectif 193 du module de boucle ouverte 19 est configurée pour appliquer un filtre passe bande sélectif sur la vitesse électrique préliminaire $\omega_{est}$. A la sortie de ce filtre sélectif 193 et donc à la sortie du module de boucle ouverte 19, on obtient une estimation de la vitesse électrique, dite vitesse électrique estimée en boucle ouverte $\omega_{estflt}$.

Avantageusement, cette vitesse électrique estimée en boucle ouverte $\omega_{estflt}$ est injectée dans la chaîne directe de l'asservissement en position du module de boucle de verrouillage de phase 21, améliorant ainsi la dynamique de ce module 21.

Le module de boucle de verrouillage de phase (symbolisé « PLL » pour Phase-Locked Loop) 21 est une boucle d'asservissement configurée pour faire converger le signal de la position électrique vers un signal utile d'une position électrique effective $\theta$ de la machine électrique 1 dépourvu d'harmoniques. Cette position électrique effective $\theta$ est une image filtrée de la position mesurée par le capteur de position 9. Le module de boucle de verrouillage de phase 21 est en outre, configuré pour fournir la vitesse électrique effective $\omega$ de la machine électrique également dépourvue d'harmoniques.

Selon un premier mode de réalisation, le module de boucle de verrouillage de phase 21 comporte les unités (ou sous-modules) suivantes : une unité de rotation 211, une unité de régulation 212, une unité d'addition 213 de vitesses, une unité d'intégration 214, une unité de compensation de retard 215, une unité de compensation de la position 216, et une unité de filtrage actif 217.

L'unité de rotation 211 est configurée pour appliquer une matrice de rotation d'un angle $\vartheta_{PLL_{comp}}$ aux signaux diphasés fictifs $x_\alpha, x_\beta$ reçus depuis le module de repère fictif diphasé 17. Ceci permet d'extraire une composante continue $x_d$ du signal fictif selon l'axe d d'un repère synchrone tournant de type repère de Park. Ainsi, la composante continue $x_d$ du signal fictif peut être définie de la manière suivante :

$$x_d = x_\alpha \cdot \cos \vartheta_{PLL_{comp}} + x_\beta \cdot \sin \vartheta_{PLL_{comp}}$$

L'unité de régulation 212 est un régulateur de type proportionnel intégral appliqué à l'erreur selon l'axe d du repère synchrone tournant. Plus particulièrement, l'unité de régulation 212 comporte un élément d'asservissement 221 et un élément correcteur 222.

L'élément d'asservissement 221 est configuré pour asservir la composante continue $x_d$ du signal fictif sur l'axe d à une consigne $x_d^*$ nulle. L'écart $\varepsilon$ entre la consigne $x_d^*$ et la composante continue $x_d$ est alors :

$$x_d^* - x_d = \varepsilon$$

L'élément correcteur 222 est configuré pour déterminer un correcteur y sur la base de l'écart entre la consigne $x_d^*$ et la composante continue $x_d$. Ce correcteur y est de type proportionnel intégral « PI » qui s'exprime selon un état désactivé ou activé, de la manière suivante :

$$y = K_{p_{PLL}} \cdot (x_d^* - x_d) + T_e \cdot \frac{z}{z-1} \cdot K_{i_{PLL}} \cdot (x_d^* - x_d) + y_0$$

avec,

$$Si\ Enable_{PLL} = 0, alors\ Reset$$
$$= 1\ et\ T_e \cdot \frac{z}{z-1} \cdot K_{i_{PLL}} \cdot (x_d^* - x_d) + y_0 = y_0$$

*: intégrateur désactivé*

$$Si\ Enable_{PLL} = 1, alors\ Reset$$
$$= 0\ et\ T_e \cdot \frac{z}{z-1} \cdot K_{i_{PLL}} \cdot (x_d^* - x_d) + y_0$$
$$= T_e \cdot \frac{z}{z-1} \cdot K_{i_{PLL}} \cdot (x_d^* - x_d) + y_0$$

*: intégrateur activé* et,

$$y_0 = 0.$$

Les gains $\{K_{p_{PLL}}, K_{i_{PLL}}\}$ sont calculés en fonction des paramètres de la boucle de verrouillage de phase selon les deux formules suivantes :

$$K_{p_{PLL}} = \frac{2 \cdot \xi_{PLL} \cdot \omega_{n_{PLL}}}{\widehat{x_\alpha}}$$

$$K_{i_{PLL}} = \frac{\omega_{n_{PLL}}^2}{\widehat{x_\alpha}}$$

Les valeurs de ces paramètres de la boucle de verrouillage de phase sont définies dans le tableau Tab 2, suivant :

[Tab. 2]

| Paramètre | Expression/valeur | Commentaire |
|---|---|---|
| $\xi_{PLL}$ | 0.707 | Facteur d'amortissement de la PLL |
| $\widehat{x_\alpha}$ | 1 | Valeur maximale des signaux d'entrées |
| $f_{s_{PLL}}$ | 15 [Hz] | Exemple de valeur de fréquence de coupure de la PLL |
| $\omega_{n_{PLL}}$ | $2 \cdot \pi \cdot f_{s\,PLL}$ [rad/s] | Bande passante de la PLL sous forme de fréquence angulaire |

La sortie y de l'élément correcteur 222 est une correction (en rad/s) de la vitesse électrique qui est exploitée pour obtenir une information plus précise de la position angulaire de l'arbre 5 de la machine électrique 1.

La vitesse électrique $\omega_{estflt}$ estimée par le module de boucle ouverte 19 (à base de détection des passage par zéro) est injectée en action prédictive « FeedForward » dans la chaîne directe. Cette action de FeedForward a le mérite d'améliorer la dynamique de la PLL et de permettre la convergence de la boucle vers la valeur utile de la vitesse de l'arbre 5 surtout lorsqu'on active la PLL à une vitesse d'arbre non-nulle (par exemple, 15 000 trs/min).

L'unité d'addition 213 est un additionneur qui est configurée pour ajouter le correcteur y issue de l'élément correcteur 222 à la vitesse électrique estimée $\omega_{estflt}$, injectée depuis le module de boucle ouverte 19. Ainsi, à la sortie de l'unité d'addition 213, on obtient une estimation d'une vitesse électrique à verrouillage de phase $\omega_{PLL}$ :

$$\omega_{PLL} = y + \omega_{est\,flt}$$

Ensuite, l'unité d'intégration 214 est configurée pour intégrer la vitesse électrique à verrouillage de phase $\omega_{PLL}$, A la sortie de l'unité d'intégration 214 on obtient alors, une estimation d'une position angulaire préliminaire $\vartheta_v$ référencée par rapport au signal $x_\alpha$, de la manière suivante :

$$\vartheta_v = T_e \cdot \frac{z}{z-1} \cdot \omega_{PLL} + \vartheta_{v_0}$$

avec :

$$si\ Enable_{PLL} = 0, alors\ Reset = 1\ et\ \vartheta_v = \vartheta_{v_0}\ : intégrateur\ désactivé$$

$$si\ Enable_{PLL} = 1, alors\ Reset = 0\ et\ \vartheta_v = T_e \cdot \frac{z}{z-1} \cdot \omega_{PLL} + \vartheta_{v_0}$$

$$: intégrateur\ activé$$

et

$$\vartheta_{v\,0} = 0.$$

L'unité de compensation de retard 215 est configurée pour compenser un retard sur l'estimation de la position angulaire préliminaire $\vartheta_v$. Ce retard est compensé en tenant compte de la rotation de l'arbre de la machine électrique à l'échelle du pas d'échantillonnage exploité pour générer la position utilisée dans la matrice de rotation. Ainsi, à la sortie de l'unité de compensation de retard 215, on obtient une position angulaire compensée $\vartheta_{PLL_{comp}}$ définie de la manière suivante :

$$\vartheta_{PLL_{comp}} = T_e \cdot \mathrm{z}^{-1} \cdot \omega_{PLL} + \mathrm{z}^{-1} \cdot \vartheta_v$$

L'unité de compensation de la position angulaire 216 de l'arbre de la machine électrique 1 est par ailleurs, configurée pour ramener l'angle estimé par la boucle de verrouillage de phase à la référence $x_\alpha$. En effet, la boucle de verrouillage de phase est basée sur la résolution de l'équation suivante :

$$x_d^* - x_d = 0$$

Ceci revient à résoudre l'équation trigonométrique suivante :

$$x_\alpha \cdot \cos \vartheta_{PLL_{comp}} + x_\beta \cdot \sin \vartheta_{PLL_{comp}} = 0$$

La résolution de cette équation trigonométrique conduit à la solution (modulo $2\pi$) suivante:

$$\vartheta_{PLL} = \vartheta_{PLL_{comp}} + \frac{\pi}{2}$$

Cette solution donne la position électrique effective de la machine électrique 1.

En outre, les signaux issus de cette boucle de verrouillage de phase sont annulés lorsque cette dernière est désactivée :

$$\begin{cases} \omega = Enable_{PLL} \cdot \omega_{PLL} \\ \theta = Enable_{PLL} \cdot (\vartheta_{PLL}, modulo\ (2\pi)) \end{cases}$$

avec,

$$\begin{cases} Enable_{PLL} = 0, si\ la\ PLL\ est\ désactivée \\ Enable_{PLL} = 1, si\ la\ PLL\ est\ activée \end{cases}$$

Avantageusement, le module de boucle de verrouillage de phase 21 comporte un filtre actif 217 configuré pour appliquer un filtrage actif passe bas à la vitesse électrique à verrouillage de phase $\omega_{PLL}$ pour déterminer une vitesse électrique effective $\omega$ de l'arbre de la machine électrique 1. Ce filtrage est réalisé selon les équations ci-dessous :

$$\omega_{PLL_{flt}} = T_e \cdot \frac{z}{z-1} \cdot y$$

et,

$$y = T_e \cdot \frac{z}{z-1} \left( -a \cdot \mathrm{z}^{-1} \cdot y - b \cdot \mathrm{z}^{-1} \cdot \omega_{PLL_{flt}} + b \cdot \omega_{PLL} \right)$$

Avec,

$\xi_{flt} = 0.707$, facteur d'amortissement du filtre de second ordre $\omega_{nflt}$, *fréquence angulaire de coupure du filtre*

$$a = 2\zeta\omega_{n_{flt}}$$

$$b = {\omega_{n_{flt}}}^2$$

Les Figs. 3A-3C sont des courbes montrant le résultat sur la position de la machine électrique, selon le procédé de l'invention.

Plus particulièrement, la Fig. 3A illustre le signal S1 issu du capteur de position 9 mesurant la position de la machine électrique 1. Ce signal S1 montre la présence des harmoniques basses fréquences.

La Fig. 3B illustre le signal idéal théorique S2 de la position de la machine électrique 1 dépourvue d'harmonique.

La Fig. 3C illustre le signal S3 de la position de la machine électrique 1, tel que traité par le procédé ou système, selon la présente invention. On voit bien que ce signal S3 est dépourvu d'harmonique et se superpose au signal idéal S1 de la Fig. 3B. Ceci montre l'efficacité du système et procédé selon l'invention dans l'extraction de l'information utile à partir d'une mesure de position perturbée.

La Fig. 4 est un zoom comparant la vitesse électrique obtenue selon l'état de l'art avec celle obtenue selon le procédé de l'invention.

La vitesse électrique sur cette figure concerne un profil de démarrage d'une turbine sur une large plage de vitesses.

Plus particulièrement, la courbe C1 montre le signal de la vitesse électrique obtenue selon l'état de l'art avec une dérivée filtrée appliquée à la mesure de position. La courbe C2 montre le signal théorique idéal de la vitesse électrique si la position mesurée avait été dépourvue d'harmoniques. La courbe C3 montre le signal de la vitesse électrique obtenu selon le procédé de la présente invention. L'allure de la courbe C3 est identique à celle de la courbe idéale C2 montrant l'efficacité du filtrage des harmoniques. En outre, la courbe C3 n'est que très peu décalée par rapport à C2 montrant la minimisation de l'atténuation de la vitesse électrique selon la présente invention.

La Fig. 5 représente de manière schématique un système de détermination de paramètres de commande, selon un deuxième mode de réalisation préféré de l'invention.

Ce deuxième mode de réalisation diffère de celui de la Fig. 2 uniquement par le fait qu'il comporte un filtre actif passe bande sélectif appliqué sur la composante continue $x_d$ (du signal fictif selon l'axe d du repère synchrone tournant) en entrée de la boucle de verrouillage de phase. Dans ce cas, le filtre actif passe bas 217 de la Fig. 2 est supprimé. En effet, la vitesse électrique effective $\omega$ selon ce deuxième mode de réalisation, correspond à la vitesse électrique à verrouillage de phase $\omega_{PLL}$.

La Fig. 6 représente de manière schématique un système de détermination de paramètres de commande, selon un troisième mode de réalisation préféré de l'invention.

Ce troisième mode de réalisation diffère de celui de la Fig. 2 uniquement par le fait qu'il comporte un observateur de vitesse 417 appliqué au signal de la position électrique effective de la machine électrique. L'observateur de vitesse 417 est configuré pour obtenir une image de la vitesse électrique filtrée. Dans ce cas, le filtre actif passe bas de la Fig. 2 est supprimé. La vitesse électrique effective $\omega$ selon ce troisième mode de réalisation correspond à l'image obtenue par l'observateur de vitesse.

La présente invention permet ainsi, d'atténuer, voire éliminer, les harmoniques. En outre, elle permet de conserver la précision et l'intégrité de la mesure de position en évitant de déphaser ou d'atténuer les signaux. Elle n'engendre pas de déphasage supplémentaire entre la position mesurée de l'axe du rotor et la position traitée numériquement. De plus, elle permet de calculer des signaux ou de données de commande de position et de vitesse dépourvus d'harmoniques et sans atténuation. Ces données de commande qui sont utilisées comme des données d'entrée pour le dispositif de commande permettent alors un pilotage très stable et très précis de la machine électrique.

**Revendications**

1.  Procédé de détermination de paramètres de commande d'une machine électrique tournante, comportant les étapes suivantes :

    - mesure de la position mécanique $\theta_m$ de l'axe d'un rotor (5) de la machine électrique (1),
    - construction de deux signaux diphasés fictifs ($x_\alpha$, $x_\beta$) en se basant sur la mesure de ladite position mécanique, lesdits deux signaux diphasés fictifs étant formés de deux signaux sinusoïdaux normalisés et décalés entre eux de 90°, **caractérisé en ce qu'**il comporte en outre :

        - génération de deux signaux pulsatoires aux passages par zéro desdits signaux diphasés fictifs ($x_\alpha$, $x_\beta$),

- détermination d'une estimation préliminaire d'une vitesse électrique, dite vitesse électrique préliminaire $\omega_{est}$, à partir de la somme desdits deux signaux pulsatoires et d'une fréquence électrique utile maximale associée à une vitesse de rotation maximale,
- détermination d'une vitesse électrique estimée en boucle ouverte $\omega_{estflt}$ en appliquant un filtre passe bande sélectif sur ladite vitesse électrique préliminaire $\omega_{est}$,
- injection desdits deux signaux diphasés fictifs $(x_\alpha, x_\beta)$ et de ladite vitesse électrique estimée en boucle ouverte $\omega_{estflt}$ dans une boucle de verrouillage de phase, et
- génération par ladite boucle de verrouillage de phase, de la position électrique effective $\theta$ de la machine électrique (1).

2. Procédé selon la revendication 1, **caractérisé en ce que** la mesure de la position mécanique $\theta_{meca}$ est réalisée par un capteur de position (9) monté sur l'arbre de la machine électrique (1).

3. Procédé selon la revendication 1 ou 2, **caractérisé en ce que** la construction desdits deux signaux diphasés fictifs comporte les étapes suivantes :

- calculer une estimation d'une position électrique, dite position électrique estimée $\theta_{elec}$, en multipliant la position mécanique $\theta_{meca}$ par le nombre p de paires de pôles de la machine électrique (1), et
- calculer à partir de ladite position électrique estimée $\theta_{elec}$, lesdits deux signaux sinusoïdaux normalisés et décalés entre eux de 90° formant ainsi, lesdits deux signaux diphasés fictifs.

4. Procédé selon l'une quelconque des revendications précédentes, **caractérisé en ce que** la détermination desdits deux signaux pulsatoires comporte les étapes suivantes :

- transformer les deux signaux diphasés fictifs sinusoïdaux en signaux carrés de largeur prédéterminé, et
- générer lesdits deux signaux pulsatoires en détectant les changements de fronts, montants et descendants, desdits signaux carrés.

5. Procédé selon l'une quelconque des revendications 1 à 4, **caractérisé en ce que** la génération par ladite boucle de verrouillage de phase, de la position électrique effective $\theta$ de la machine électrique (1) comporte les étapes suivantes :

- appliquer une matrice de rotation aux signaux diphasés fictifs $x_\alpha$, $x_\beta$ pour extraire une composante continue $x_d$ du signal fictif selon l'axe d d'un repère synchrone tournant,
- asservir la composante continue $x_d$ à une consigne $x_d^*$ nulle,
- déterminer un correcteur y sur la base de l'écart entre ladite consigne et ladite composante continue,
- déterminer une estimation d'une vitesse électrique à verrouillage de phase $\omega_{PLL}$, en ajoutant ledit correcteur y à la vitesse électrique estimée $\omega_{estflt}$ par la boucle ouverte,
- déterminer une estimation d'une position angulaire préliminaire $\vartheta_v$ en intégrant ladite vitesse électrique à verrouillage de phase $\omega_{PLL}$, et
- déterminer la position électrique effective de la machine électrique (1) en compensant un retard sur l'estimation de la position angulaire préliminaire $\vartheta_v$ de l'arbre (5) de la machine électrique.

6. Procédé selon la revendication 5, **caractérisé en ce qu'**il comporte la détermination d'une vitesse électrique effective $\omega$ de la machine électrique (1) en appliquant un filtrage actif passe bas (217) à la vitesse électrique à verrouillage de phase $\omega_{PLL}$.

7. Procédé selon la revendication 5, **caractérisé en ce qu'**il comporte la détermination d'une vitesse électrique effective $\omega$ de la machine électrique (1) en appliquant un filtrage actif passe bande sélectif (317) sur la composante continue $x_d$ du signal fictif selon l'axe d du repère synchrone tournant, la vitesse électrique effective $\omega$ correspondant alors à la vitesse électrique à verrouillage de phase $\omega_{PLL}$.

8. Procédé selon la revendication 5, **caractérisé en ce qu'**il comporte la détermination d'une vitesse électrique effective $\omega$ de la machine électrique en appliquant un observateur de vitesse (417) à la position électrique effective de la machine électrique, la vitesse électrique effective $\omega$ correspondant alors à une image de la vitesse électrique filtrée obtenue par ledit observateur de vitesse.

9. Procédé de commande d'une machine électrique tournante comprenant une détermination de paramètres de commandes selon l'une quelconque des revendications précédentes

10. Système de détermination de paramètres de commande d'une machine électrique tournante, comportant :

- un module de repère fictif diphasé (17) configuré pour construire deux signaux diphasés fictifs ($x_a$,$x_\beta$) en se basant sur une mesure de la position mécanique $\theta_{meca}$ de l'axe d'un rotor de la machine tournante reçue depuis un capteur de position, lesdits deux signaux diphasés fictifs étant formés de deux signaux sinusoïdaux normalisés et décalés entre eux de 90°, et **caractérisé en ce que** le système comporte en outre :

- un module de boucle ouverte (19) configuré pour : générer deux signaux pulsatoires aux passages par zéro desdits signaux diphasés fictifs ($x_\alpha$, $x_\beta$); déterminer une estimation préliminaire d'une vitesse électrique, dite vitesse électrique préliminaire $\omega_{est}$, à partir de la somme desdits deux signaux pulsatoires et d'une fréquence électrique utile maximale associée à une vitesse de rotation maximale ; et déterminer d'une vitesse électrique estimée en boucle ouverte $\omega_{estflt}$ en appliquant un filtre passe bande sélectif sur ladite vitesse électrique préliminaire $\omega_{est}$, et
- un module de boucle de verrouillage de phase (21) configuré pour générer la position électrique effective $\theta$ de la machine tournante à partir desdits deux signaux diphasés fictifs ($x_\alpha$, $x_\beta$) et en utilisant ladite vitesse électrique estimée en boucle ouverte $\omega_{estflt}$ reçue depuis le module de boucle ouverte.

11. Dispositif de pilotage d'une machine électrique tournante comportant le système (11) de détermination de paramètres électriques selon la revendication 10.

12. Machine électrique tournante comportant le dispositif de pilotage (13) selon la revendication 11.

**Patentansprüche**

1. Verfahren zum Bestimmen von Regelparametern einer drehenden elektrischen Maschine, das die folgenden Schritte aufweist:

- Messen der mechanischen Position $\theta_m$ der Achse eines Rotors (5) der elektrischen Maschine (1),
- Aufbauen von zwei fiktiven Zweiphasensignalen ($x_\alpha$, $x\beta$) auf der Grundlage der Messung der mechanischen Position, wobei die zwei fiktiven Zweiphasensignale aus zwei normalisierten und um 90° zueinander versetzten Sinussignalen gebildet sind, **dadurch gekennzeichnet, dass** es ferner Folgendes aufweist:

- Erzeugen von zwei pulsierenden Signalen an den Nulldurchgängen der fiktiven Zweiphasensignalen ($x_\alpha$, $x\beta$),
- Bestimmen einer vorläufigen Schätzung einer elektrischen Geschwindigkeit, der vorläufigen Geschwindigkeit $\omega_{est}$, aus der Summe der zwei pulsierenden Signale und einer maximalen elektrischen Nutzfrequenz, die mit einer maximalen Drehzahl verbunden ist,
- Bestimmen einer geschätzten elektrischen Geschwindigkeit im offenen Regelkreis $\omega_{ist\,flt}$ durch Anwenden eines selektiven Bandpassfilters auf die vorläufige elektrische Geschwindigkeit $\omega_{est}$,
- Einspeisen der zwei fiktiven Zweiphasensignale ($x_\alpha$, $x\beta$) und der geschätzten elektrischen Geschwindigkeit im offenen Regelkreis $\omega_{est\,flt}$ in eine Phasenverriegelungsschleife, und
- Erzeugen der tatsächlichen elektrischen Position $\theta$ der elektrischen Maschine (1) durch die Phasenverriegelungsschleife.

2. Verfahren nach Anspruch 1, **dadurch gekennzeichnet, dass** das Messen der mechanischen Position $\theta_{meca}$ durch einen an der Welle der elektrischen Maschine (1) montierten Positionssensor (9) erfolgt.

3. Verfahren nach Anspruch 1 oder 2, **dadurch gekennzeichnet, dass** das Aufbauen der zwei fiktiven Zweiphasensignale die folgenden Schritte aufweist:

- Berechnen einer Schätzung einer elektrischen Position, der geschätzten elektrischen Position $\theta_{elec}$, durch Multiplizieren der mechanischen Position $\theta_{meca}$ mit der Anzahl p der Polpaare der elektrischen Maschine (1), und
- ausgehend von der geschätzten elektrischen Position $\theta_{elec}$, Berechnen der zwei normalisierten und um 90° zueinander versetzten Sinussignale, sodass sie die zwei fiktiven Zweiphasensignale bilden.

4. Verfahren nach einem der vorhergehenden Ansprüche, **dadurch gekennzeichnet, dass** das Bestimmen der zwei pulsierenden Signale die folgenden Schritte aufweist:

- Umwandeln der zwei sinusförmigen fiktiven Zweiphasensignale in Rechtecksignale mit vorbestimmter Breite, und
- Erzeugen der zwei pulsierenden Signale durch Erkennen der Änderungen der ansteigenden und absteigenden Flanken der Rechtecksignale.

5. Verfahren nach einem der Ansprüche 1 bis 4, **dadurch gekennzeichnet, dass** das Erzeugen der tatsächlichen elektrischen Position $\theta$ der elektrischen Maschine (1) durch die Phasenverriegelungsschleife folgende Schritte aufweist:

- Anwenden einer Drehmatrix auf die fiktiven Zweiphasensignale $x_\alpha$, xß, zum Extrahieren einer kontinuierlichen Komponente $x_d$ des fiktiven Signals entlang der Achse d einer drehenden Synchronmarke,
- Setzen der kontinuierlichen Komponente $x_d$ auf einen Sollwert $x^*_d$ von Null,
- Bestimmen eines Korrektors y auf der Grundlage der Abweichung zwischen dem Sollwert und der kontinuierlichen Komponente,
- Bestimmen einer Schätzung einer elektrischen Geschwindigkeit mit Phasenverriegelung $\omega_{PLL}$ durch Hinzufügen des Korrektors y zu der geschätzten elektrischen Geschwindigkeit $\omega_{est\,flt}$ durch die offene Schleife,
- Bestimmen einer Schätzung einer vorläufigen Winkelposition $\vartheta_v$ durch Integrieren der phasenverriegelten elektrischen Geschwindigkeit $\omega_{PLL}$, und
- Bestimmen der tatsächlichen elektrischen Position der elektrischen Maschine (1) durch Ausgleichen einer Verzögerung bei der Schätzung der vorläufigen Winkelposition $\vartheta_v$ der Welle (5) der elektrischen Maschine.

6. Verfahren nach Anspruch 5, **dadurch gekennzeichnet, dass** es die Bestimmung einer tatsächlichen elektrischen Geschwindigkeit $\omega$ der elektrischen Maschine (1) durch Anwenden einer aktiven Tiefpassfilterung (217) auf die phasenverriegelte elektrische Geschwindigkeit $\omega_{PLL}$ aufweist.

7. Verfahren nach Anspruch 5, **dadurch gekennzeichnet, dass** es die Bestimmung einer tatsächlichen elektrischen Geschwindigkeit $\omega$ der elektrischen Maschine (1) durch Anwenden einer aktiven selektiven Bandpassfilterung (317) auf die kontinuierliche Komponente $x_d$ des fiktiven Signals gemäß der Achse d des drehenden Synchronmarke aufweist, wobei die tatsächliche elektrische Geschwindigkeit $\omega$ dann der phasenverriegelten elektrischen Geschwindigkeit $\omega_{PLL}$ entspricht.

8. Verfahren nach Anspruch 5, **dadurch gekennzeichnet, dass** es das Bestimmen einer tatsächlichen elektrischen Geschwindigkeit $\omega$ der elektrischen Maschine durch Anwenden eines Geschwindigkeitsbeobachters (417) auf die tatsächliche elektrische Position der elektrischen Maschine aufweist, wobei die tatsächliche elektrische Geschwindigkeit dann einem Bild der gefilterten elektrischen Geschwindigkeit $\omega$ entspricht, das von dem Geschwindigkeitsbeobachter erhalten wird.

9. Verfahren zum Regeln einer drehenden elektrischen Maschine, umfassend eine Bestimmung von Regelparametern nach einem der vorhergehenden Ansprüche.

10. System zum Bestimmen von Regelparametern einer drehenden elektrischen Maschine, das Folgendes aufweist:

- ein fiktives Zweiphasenmarkierungsmodul (17), das so konfiguriert ist, dass es zwei fiktive Zweiphasensignale $(x_\alpha, x\beta)$ auf der Grundlage einer von einem Positionssensor empfangenen Messung der mechanischen Position $\theta_{meca}$ der Achse eines Rotors der drehenden Maschine aufbaut, wobei die zwei fiktiven Zweiphasensignale aus zwei normalisierten und um 90° zueinander versetzten Sinussignalen gebildet sind, und **dadurch gekennzeichnet, dass** das System ferner Folgendes aufweist:

- ein offenes Regelkreismodul (19), das für Folgendes konfiguriert ist: Erzeugen von zwei pulsierenden Signalen an den Nulldurchgängen der fiktiven Zweiphasensignale $(x_\alpha, x\beta)$; Bestimmen einer vorläufigen Schätzung einer elektrischen Geschwindigkeit, der vorläufigen Geschwindigkeit $\omega_{est}$, aus der Summe der zwei pulsierenden Signale und einer maximalen elektrischen Nutzfrequenz, die mit einer maximalen Drehzahl verbunden ist; und Bestimmen einer geschätzten elektrischen Geschwindigkeit im offenen Regelkreis $\omega_{estflt}$ durch Anwenden eines selektiven Bandpassfilters auf die vorläufige elektrische Geschwindigkeit $\omega_{est}$, und

- ein Phasenverriegelungsschleifenmodul (21), das so konfiguriert ist, dass es die tatsächliche elektrische Position θ der drehenden Maschine aus den zwei fiktiven Zweiphasensignalen ($x_\alpha$, $x\beta$) und durch Verwenden der im offenen Regelkreis geschätzten elektrischen Geschwindigkeit $\omega_{est\,flt}$, die von dem offenen Regelkreismodul empfangen wird, erzeugt.

11. Steuervorrichtung einer drehenden elektrischen Maschine, die das System (11) zum Bestimmen elektrischer Parameter nach Anspruch 10 aufweist.

12. Drehende elektrische Maschine mit der Steuervorrichtung (13) nach Anspruch 11.

**Claims**

1. A method for determining control parameters of a rotating electric machine, including the following steps:

   - measuring the mechanical position $\theta_m$ of the axis of a rotor (5) of the electric machine (1),
   - constructing two imaginary two-phase signals ($x_\alpha$, $x_\beta$) based on the measurement of said mechanical position, said two imaginary two-phase signals being formed as two sinusoidal signals normalized and shifted from each other by 90°,

   **characterized in that** it further includes:

   - generating two pulse signals at the zero crossings of said imaginary two-phase signals ($x_\alpha$, $x_\beta$),
   - determining a preliminary estimate of an electrical speed, so-called the preliminary electrical speed $\omega_{est}$, from the sum of said two pulse signals and a maximum useful electrical frequency associated with a maximum rotational speed,
   - determining an open-loop estimated electrical speed $\omega_{estflt}$ by applying a selective band-pass filter on said preliminary electrical speed $\omega_{est}$
   - injecting said two imaginary two-phase signals ($x_\alpha$, $x_\beta$) and said open-loop estimated electrical speed $\omega_{estflt}$ into a phase-locked loop, and
   - generating, by said phase-locked loop, the actual electrical position $\theta$ of the electric machine (1).

2. The method according to claim 1, **characterized in that** the measurement of the mechanical position $\theta$ is carried out by a position sensor (9) mounted on the shaft of the electric machine (1).

3. The method according to claim 1 or 2, **characterized in that** the construction of said two imaginary two-phase signals includes the following steps:

   - calculating an estimate of an electrical position, so-called the estimated electrical position $\theta$ , by multiplying the mechanical position $\theta$ by the number p of pole pairs of the electric machine (1), and
   - calculating from said estimated electrical position $\theta$ , said two sinusoidal signals normalized and shifted from each other by 90° thereby forming said two imaginary two-phase signals.

4. The method according to any one of the preceding claims, **characterized in that** the determination of said two pulse signals includes the following steps:

   - transforming the two sinusoidal imaginary two-phase signals into square signals with a predetermined width, and
   - generating said two pulse signals by detecting changes in the rising and falling edges of said square signals.

5. The method according to any one of claims 1 to 4, **characterized in that** the generation, by said phase-locked loop, of the actual electrical position $\theta$ of the electric machine (1) includes the following steps:

   - applying a rotation matrix to the imaginary two-phase signals $x_\alpha$ , $x_\beta$ to extract a continuous component x of the imaginary signal according to the axis d of a rotating synchronous reference frame,

   - servo-controlling the continuous component x at a zero $x_d^*$ setpoint,

   - determining a corrector y based on the deviation between said setpoint and said continuous component,

- determining an estimate of a phase-locked electrical speed $\omega_{PLL}$, by adding said corrector y to the electrical speed estimated $\omega_{estflt}$ by the open loop,
- determining an estimate of a preliminary angular position $\vartheta_v$ by integrating said phase-locked electrical speed $\omega_{PLL}$, and
- determining the actual electrical position of the electric machine (1) by compensating for a delay in the estimate of the preliminary angular position $\vartheta_v$ of the shaft (5) of the electric machine.

6. The method according to claim 5, **characterized in that** it includes determining an actual electrical speed $\omega$ of the electric machine (1) by applying low-pass active filtering (217) to the phase-locked electrical speed $\omega_{PLL}$.

7. The method according to claim 5, **characterized in that** it includes determining an actual electrical speed $\omega$ of the electric machine (1) by applying selective band-pass active filtering (317) on the continuous component x of the imaginary signal according to the axis d of the rotating synchronous reference frame, the actual electrical speed $\omega$ then corresponding to the phase-locked electrical speed $\omega_{PLL}$.

8. The method according to claim 5, **characterized in that** it includes determining an actual electrical speed $\omega$ of the electric machine by applying a speed observer (417) to the actual electrical position of the electric machine, the actual electrical speed $\omega$ then corresponding to an image of the filtered electrical speed obtained by said speed observer.

9. A method for controlling a rotating electric machine comprising determining control parameters according to any one of the preceding claims

10. A system for determining control parameters of a rotating electric machine, including:

- a two-phase imaginary reference frame module (17) configured to construct two imaginary two-phase signals $(x_\alpha, x_\beta)$ based on a measurement of the mechanical position $\theta$ of the axis of a rotor of the rotating machine received from a position sensor, said two imaginary two-phase signals being formed as two sinusoidal signals normalized and shifted from each other by 90°,

and **characterized in that** the system further includes:

- an open-loop module (19) configured to: generate two pulse signals at the zero crossings of said imaginary two-phase signals $(x_\alpha, x_\beta)$; determine a preliminary estimate of an electrical speed, said preliminary electrical speed $\omega_{est}$, from the sum of said two pulse signals and a maximum useful electrical frequency associated with a maximum rotational speed; and determine an open-loop estimated electrical speed $\omega_{estflt}$ by applying a selective band-pass filter on said preliminary electrical speed $\omega_{est}$, and
- a phase-locked loop module (21) configured to generate the actual electrical position $\theta$ of the rotating machine from said two imaginary two-phase signals $(x_\alpha, x_\beta)$ and using said open-loop estimated electrical speed $\omega_{estflt}$ received from the open-loop module.

11. A device for controlling a rotating electric machine including the system (11) for determining electrical parameters according to claim 10.

12. A rotating electric machine including the control device (13) according to claim 11.

FIG.1

FIG.2

FIG.3A

theta_résolveur_elec

S1

FIG.3B

theta_ideal

S2

FIG.3C

theta_PLL

S3

52.5015   52.502   52.5025   52.503   52.5035   52.504   52.5045   52.505

EP 4 420 231 B1

FIG.4

[Fig. 5]

FIG.5

[Fig. 6]

FIG.6

## RÉFÉRENCES CITÉES DANS LA DESCRIPTION

**Documents brevets cités dans la description**

- US 2018052009 A
- WO 2021121770 A

- FR 3104856